# EUROPEAN PATENT APPLICATION

(11) **EP 3 432 158 A1**
(43) Date of publication of application: **23.01.2019**
(21) Application number: 17765706.1
(22) Date of filing: 27.02.2017
(51) Int. Cl.: G06F 17/30

(54) **DATA AGGREGATION METHOD AND DEVICE**

(30) Priority: 15.03.2016 CN 201610147522
(71) Applicant: Alibaba Group Holding Limited, Grand Cayman (KY)
(72) Inventor: LI, Julei, Hangzhou Zhejiang 311121 (CN)
(74) Representative: Finnegan Europe LLP
(86) International application number: PCT/CN2017/075069
(87) International publication number: WO 2017/157164

(57) **Abstract**

The present invention relates to the field of information technology, and discloses a data aggregation method and apparatus, to solve a technical problem that the precision of data aggregation and statistics is relatively low and another technical problem that data aggregation operations have a relatively high delay, so that the efficiency of data aggregation can be improved, and the real-time performance of data aggregation can be ensured. A main technical solution of the present invention is as follows: when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. The present invention is mainly used to aggregate the massive service data stored in the cloud environment.

## Description

### Technical Field

The present invention relates to the field of information technology, and in particular, to a data aggregation method and apparatus.

### Background Art

As the Internet keeps developing, it becomes increasingly popular to store and collect statistics of service data in a cloud environment, for example, to store and collect statistics of different types of service data such as queries per second (QPS) data and page view (PV) data. A huge amount of data is stored in the cloud environment. Therefore, massive service data stored in the cloud environment needs to be aggregated before statistics of the massive service data is collected.

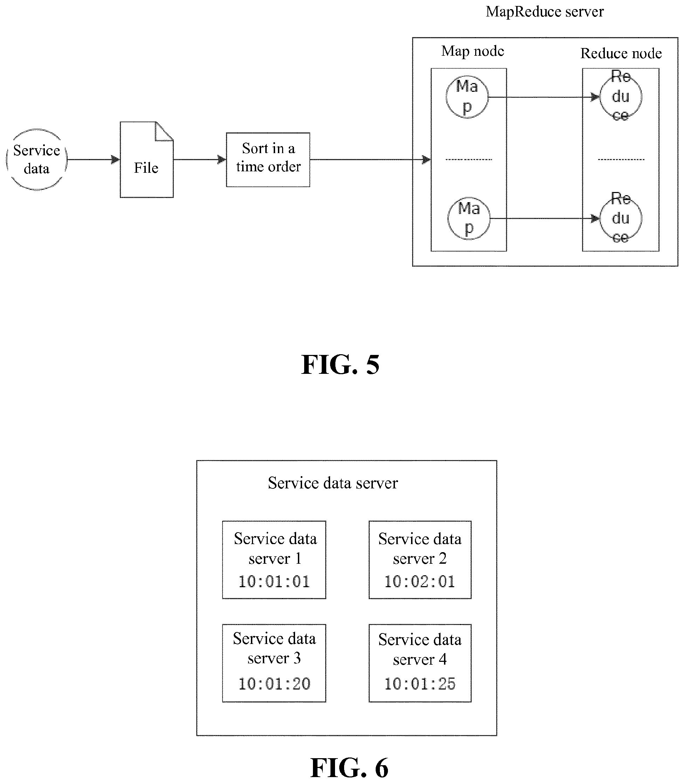

Currently, during the aggregation of the massive service data stored in the cloud environment, various types of service data received in different time periods are first written into files, all service data having a type that needs to be aggregated is then read from the files, and the read service data is eventually sorted in a time order and sent to a computing server for data aggregation. For example, the service data is sent to a MapReduce server for data aggregation. Details may be shown in FIG. 5. However, read/write operations need to be performed on files during data aggregation. To resolve a file locking conflict problem that exists during the read/write operations on the files, during data aggregation, a file copying process of saving data to be aggregated is performed once. As a result, data computation has a relatively high delay. Moreover, read service data further needs to be sorted once in a time order. Consequently, the process of data aggregation is relatively complex, data aggregation operations have relatively low efficiency, and the data aggregation operations have a relatively high delay. Moreover, after service data is read from a file and an aggregation operation is completed, if service data whose time is the same as or earlier than that of the service data on which the aggregation operation is performed is received again, the part of service data that is received again will be discarded. As a result, the precision of data aggregation and statistics is relatively low.

### Summary of the Invention

In view of this, the present invention provides a data aggregation method and apparatus. The main objective is to resolve a technical problem that data aggregation operations have a relatively high delay during aggregation of massive service data stored in a cloud environment.

Moreover, the present invention further provides a data aggregation method and apparatus. The main objective is to resolve a technical problem that the precision of data aggregation and statistics is relatively low.

To achieve the foregoing objectives, the present invention provides the following technical solutions:
In one aspect, the present invention provides a data aggregation method, including:
   receiving, by a data aggregation server, service data sent by a service data server, the service data carrying a time stamp, and the time stamp being used to identify the time at which the service server receives the service data;
   detecting whether the time stamp is greater than a target time stamp, the target time stamp being a time stamp carried in service data that is sent by the service data server and is received by the data aggregation server a previous time; and
   performing, if the time stamp is greater than the target time stamp, data aggregation on service data whose time stamp is the target time stamp, the service data corresponding to the target time stamp being stored at a preset storage location.

In another aspect, the present invention provides a data aggregation apparatus, including:
a receiving unit configured to receive service data sent by a service data server, the service data carrying a time stamp, and the time stamp being used to identify the time at which the service server receives the service data;
a detection unit configured to detect whether the time stamp received by the receiving unit is greater than a target time stamp, the target time stamp being a time stamp carried in service data that is sent by the service data server and is received a previous time; and
an aggregation unit configured to perform, if the time stamp detected by the detection unit is greater than the target time stamp, data aggregation on service data whose time stamp is the target time stamp, the service data corresponding to the target time stamp being stored at a preset storage location.

By using the foregoing technical solutions, the technical solutions provided in the embodiments of the present invention at least have the following advantages:
For the data aggregation method and apparatus provided in the present invention, when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. Currently, during the aggregation of the massive service data stored in the cloud environment, read/write operations need to be performed on files for storing service data, and read service data further needs to be sorted once in a time order. Meanwhile, if service data whose time is the same as or earlier than that of service data on which an aggregation operation is performed is received again, this part of service data will be discarded. In comparison, in the present invention, to aggregate service data in different time periods, it is only necessary to detect whether a time stamp of current service data is greater than the time stamp carried in the service data that is sent by the service data server and is received by the data aggregation server the previous time, so that the efficiency of data aggregation can be improved. Because a detection operation is performed in real time, a delay of data aggregation operations can be reduced, and the real-time performance of data aggregation can be improved. Moreover, because a time tolerance period is set in the present invention, an aggregation operation can be performed on currently received service data whose time is relatively early, so that the precision of data aggregation and statistics can be improved.

The foregoing description is only the brief description of the technical solutions of the present invention. To understand the technical measures of the present invention more clearly and implement the content according to the specification, and to make the foregoing and other objectives, features, and advantages of the present invention more comprehensible, specific implementation manners of the present invention are described below.

### Brief Description of the Drawings

Various other advantages and benefits will become clear and obvious to those of ordinary skill in the art by reading the following detailed description of preferred implementation manners. The accompanying drawings are only used for the purpose of showing the preferred implementation manners and are not intended to limit the present invention. The same reference numeral is used to represent the same component throughout the accompanying drawings. In the accompanying drawings:
FIG. 1 is a flowchart of a data aggregation method according to an embodiment of the present invention;
FIG. 2 is a flowchart of another data aggregation method according to an embodiment of the present invention;
FIG. 3 is a schematic structural diagram of a data aggregation apparatus according to an embodiment of the present invention;
FIG. 4 is a schematic structural diagram of another data aggregation apparatus according to an embodiment of the present invention;
FIG. 5 is a schematic diagram of an existing data aggregation procedure according to the present invention;
FIG. 6 is a schematic diagram of time stamps of service data in different service data servers according to an embodiment of the present invention;
FIG. 7 is a schematic diagram of local time of different data aggregation servers according to an embodiment of the present invention;
FIG. 8 is a schematic diagram of time stamps of different service data in a data aggregation server according to an embodiment of the present invention; and
FIG. 9 is a schematic diagram of a mapping manner between time of a service data server and time of a data aggregation server according to an embodiment of the present invention.

### Detailed Description

The exemplary embodiments of the present disclosure are described below in further detail with reference to the accompanying drawings. Although the exemplary embodiments of the present disclosure are shown in the accompanying drawings, it should be understood that the present disclosure may be implemented in various forms and should not be limited by the embodiments described herein. Instead, these embodiments are provided for more thorough understanding of the present disclosure and full conveyance of the scope of the present disclosure to those skilled in the art.

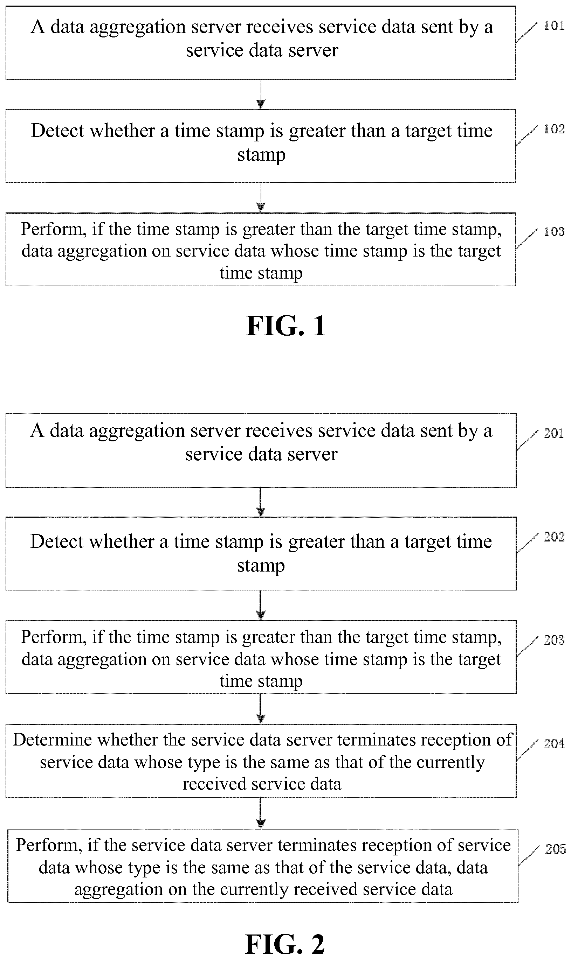

An embodiment of the present invention provides a data aggregation method. As shown in FIG. 1, the method includes the following steps:
101: A data aggregation server receives service data sent by a service data server.

The service data carries a time stamp, and the time stamp is used to identify the time at which the service server receives the service data. For example, if the time at which the service data server receives the service data is 10:01, a time stamp carried in the service data received by the data aggregation server is 10:01. The data aggregation server is configured to perform aggregation processing on the service data sent by the service data server. The service data may be different types of service data such as QPS data and PV data, or may be the same type of service data of different applications, for example, PV data of an application A and an application B. This is not limited in this embodiment of the present invention.

102. It is detected whether the time stamp is greater than a target time stamp.

The target time stamp is a time stamp carried in service data that is sent by the service data server and is received by the data aggregation server a previous time. Different time stamps may be presented in a time order in a manner such as a list and a time axis. This is not limited in this embodiment of the present invention. For example, when different time stamps are presented in a time order in a manner such as a time axis, the time on the time axis keeps rolling forward to ensure that the time on the time axis is a current time. For this embodiment of the present invention, it is detected whether the time stamp is greater than the target time stamp, that is, it is detected whether the time of receiving service data currently differs from the time of receiving service data a previous time, to determine whether to trigger a service data aggregation operation, so that the real-time performance of the service data aggregation operation can be ensured.

For this embodiment of the present invention, the time stamps may be configured by using a second as a unit or by using a minute as a unit. This is not limited in this embodiment of the present invention. When the time stamps are configured by using a second as a unit, different time stamps are distinguished by seconds, for example, 10:01:01, 10:01:02, and 10:01:03. When the time stamps are configured by using a minute as a unit, different time stamps are distinguished by minutes, for example, 10:01, 10:02, and 10:03; wherein 10:01:01 to 10:01:59 all fall under 10:01. The rest may be deduced by analogy.

For example, the service data server configures the time stamps by using a minute as a unit. If a time stamp carried in service data that is sent by the service data server and is currently received by the data aggregation server is 10:01 and a time stamp carried in service data that is sent by the service data server and is received by the data aggregation server a previous time is also 10:01, it is determined not to trigger the service data aggregation operation. If a time stamp carried in service data that is sent by the service data server and is currently received by the data aggregation server is 10:02 and is greater than the time stamp 10:01 carried in the service data that is sent by the service data server and received by the data aggregation server the previous time, it is determined to trigger the service data aggregation operation.

103. If the time stamp is greater than the target time stamp, data aggregation is performed on service data whose time stamp is the target time stamp.

The service data corresponding to the target time stamp is stored at a preset storage location. The preset storage location may be a preset mapping relationship table, a preset queue, or the like. This is not limited in this embodiment of the present invention. For this embodiment of the present invention, if the time stamp is greater than the target time stamp, for example, changes from 10:01 to 10:02, or changes from 10:01:01 to 10:01:02, it indicates that a time stamp carried in current service data changes forward, it is triggered in real time to perform aggregation operation on all service data having the previous time stamp, so that the real-time performance of a service data aggregation operation can be ensured, and the efficiency of the service data aggregation operation can be improved.

For the data aggregation method provided in this embodiment of the present invention, when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. Currently, during the aggregation of the massive service data stored in the cloud environment, read/write operations need to be performed on files for storing service data, and read service data further needs to be sorted once in a time order. In comparison, in the present invention, to aggregate service data in different time periods, it is only necessary to detect whether a time stamp of current service data is greater than the time stamp carried in the service data that is sent by the service data server and is received by the data aggregation server the previous time, so that the efficiency of data aggregation can be improved. Because a detection operation is performed in real time, a delay of data aggregation operations can be reduced, and at the same time the real-time performance of data aggregation can be improved.

Further, an embodiment of the present invention provides another data aggregation method. As shown in FIG. 2, the method includes the following steps:
201: A data aggregation server receives service data sent by a service data server.

The service data carries a time stamp, and the time stamp is used to identify the time at which the service server receives the service data. For the corresponding description of the data aggregation server and the service data, reference can be made to the corresponding description of the embodiment in FIG. 1. This is no longer elaborated herein.

202: It is detected whether the time stamp is greater than a target time stamp.

The target time stamp is a time stamp carried in service data that is sent by the service data server and is received by the data aggregation server a previous time. For the specific description of a manner of configuring the time stamp, reference can be made to the corresponding description of the embodiment in FIG. 1. This is no longer elaborated herein.

For this embodiment of the present invention, it is detected whether the time stamp is greater than the target time stamp, that is, it is detected whether the time of receiving service data currently changes forward from the time of receiving service data a previous time, to determine whether to trigger a service data aggregation operation, so that the real-time performance of the service data aggregation operation can be ensured.

Further, after step 202, the method may further include: buffering, if the time stamp is the same as the target time stamp, the currently received service data in a preset queue corresponding to the target time stamp. All service data whose time stamp is the target time stamp is buffered in the preset queue. Service data having different time stamps is respectively buffered in different preset queues. Because buffer and read operations on queues have a relatively low delay, a delay of data aggregation operations can further be reduced by buffering service data in queues, so that the real-time performance of data aggregation operations can be improved. If the time stamp is less than the target time stamp, the currently received service data is deleted. For example, the time stamp changes from 10:01 to 09:50, the currently received service data whose time stamp is 09:50 is deleted, so that the accuracy of data aggregation can be ensured.

203: If the time stamp is greater than the target time stamp, data aggregation is performed on service data whose time stamp is the target time stamp.

The service data corresponding to the target time stamp is stored at a preset storage location. The preset storage location may be a preset mapping relationship table, a preset queue, or the like. This is not limited in this embodiment of the present invention.

For this embodiment of the present invention, before step 203, the method may further include: determining whether service data whose time stamp is the target time stamp is received within a first preset time period after the service data is currently received. It should be noted that after service data having a time stamp is aggregated, for reasons such as a delay in data transmission, the service data server may receive service data having the time stamp again. In this case, if the service data received after a delay is not processed, a loss of service data may be caused, and as a result, the accuracy of service data aggregation is relatively low. Therefore, before data aggregation is performed, by configuring a time tolerance period, that is, the first preset time period, the loss of service data that is received after a delay can be avoided, and the accuracy of service data aggregation and statistics can be improved.

The first preset time period may be configured according to a configuration unit of a time stamp. For example, if the configuration unit of the time stamp is a second, the first preset time period may be 1 second, 2 seconds, or the like. If the configuration unit of the time stamp is a minute, the first preset time period may be 1 minute, 2 minutes, or the like. The first preset time period is configured according to the configuration unit of the time stamp, so that the accuracy of configuring a time tolerance period can further be improved, and the accuracy of service data aggregation can further be improved.

In this case, step 203 may specifically include: performing, if no service data whose time stamp is the target time stamp is received within the first preset time period, data aggregation on service data whose time stamp is the target time stamp; and performing, if service data whose time stamp is the target time stamp is received within the first preset time period, data aggregation on the service data received within the first preset time period and service data whose time stamp is the target time stamp.

For example, the service data server configures the time stamps by using a minute as a unit. In this case, the first preset time period is configured to be 5 minutes. If a time stamp carried in service data that is sent by the service data server and is currently received by the data aggregation server is 10:02 and a time stamp carried in service data that is sent by the service data server and is received by the data aggregation server a previous time is 10:01, before the service data whose time stamp is 10:01 is aggregated, it is determined whether service data carrying a time stamp 10:01 is received within five minutes starting from the current time. If such service data is received within five minutes, data aggregation is performed on the service data that is received within five minutes and has a time stamp 10:01 and the service data that is received before and has a time stamp 10:01. If no such service data is received within five minutes, it indicates that there is no delayed service data at this time, and data aggregation is performed on the service data whose time stamp is 10:01, so that the accuracy of data aggregation can be ensured.

Further, after step 203, the method may further include: establishing a queue corresponding to a time stamp of currently received service data; and buffering the service data in the queue. Because different time stamps correspond to different queues, a new queue is created to store the currently received service data.

204: It is determined whether the service data server terminates reception of service data whose type is the same as that of the currently received service data.

Service data having the same type may be specifically service data having the same service data type. For example, it is determined whether to terminate reception of service data having a QPS type. The service data having the same type may further be specifically service data of the same application. For example, it is determined whether to terminate reception of service data of an application A.

For this embodiment of the present invention, step 204 may specifically include: determining whether service data whose type is the same as that of the service data is received within a second preset time period after the service data is currently received; and confirming, if no service data whose type is the same as that of the service data is received within the second preset time period, that the service data server terminates reception of service data whose type is the same as that of the service data. It should be noted that if no service data whose type is the same as that of the service data is received within a particular time period after the service data is currently received, it may be determined that the service data server terminates reception of service data whose type is the same as that of the currently received service data.

The second preset time period may be specifically configured according to the configuration unit of the time stamp. For example, if the configuration unit of the time stamp is a second, the second preset time period may be 1 second, 2 seconds, or the like. If the configuration unit of the time stamp is a minute, the second preset time period may be 1 minute, 2 minutes, or the like. The second preset time period is configured according to the configuration unit of the time stamp, so that the precision of determining termination of service data reception can further be improved, and the accuracy of a service data aggregation operation can be improved.

205: If the service data server terminates reception of service data whose type is the same as that of the service data, data aggregation is performed on the currently received service data.

For this embodiment of the present invention, when the service data server terminates reception of service data whose type is the same as that of the service data, it indicates that the data aggregation server no longer receives service data having the type. That is, in this case, it can no longer be determined, by using if service data having this the type is received again, whether a time stamp of service data having the type is changed. Therefore, in this case, data aggregation can be directly performed on the currently received service data, so that it can be ensured that if the service data server terminates reception of service data whose type is the same as that of the service data, data aggregation on the currently received service data can be completed.

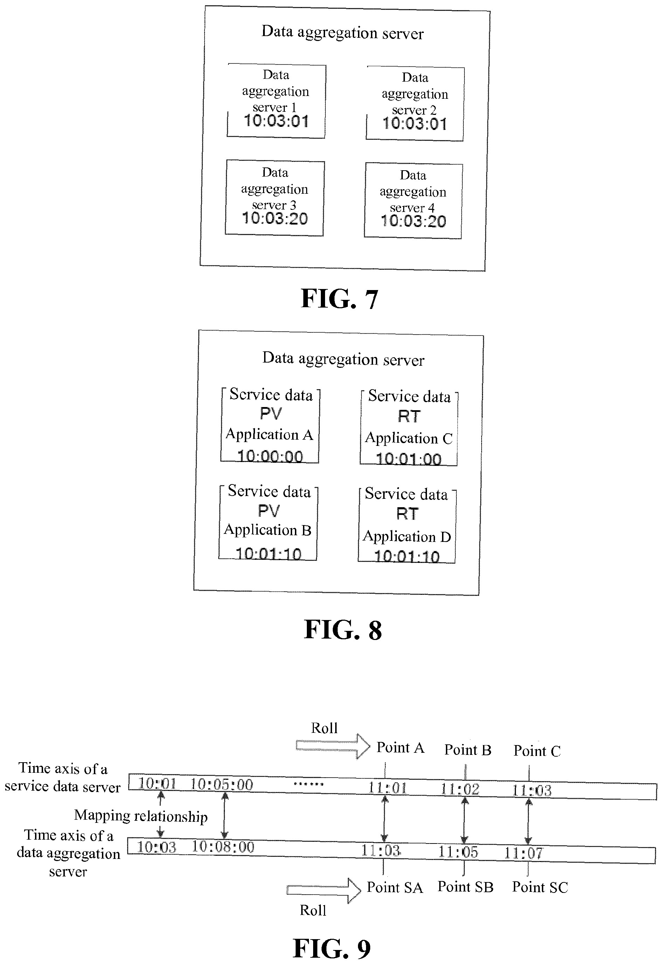

For this embodiment of the present invention, step 205 may specifically include: acquiring, if the service data server terminates reception of service data whose type is the same as that of the service data, local time of an aggregation computing server corresponding to a next adjacent time stamp different from the current time stamp, each different time stamp configured by the service data server respectively corresponding to one local time of the aggregation computing server. Details may be shown in FIG. 9. Data aggregation is performed on the currently received service data according to the local time of the aggregation computing server. The local time of the data aggregation server may be presented in a time order in a manner such as a list and a time axis. This is not limited in this embodiment of the present invention.

It should be noted that due to problems such as network conditions and a time difference between different servers, the local time of the data aggregation server may be different from a time stamp configured by the service data server. For example, as shown in FIG. 6 and FIG. 7, service data of a service data server 1 is processed by a data aggregation server 1. It can be seen that a time stamp configured by the service data server 1 is 10:01:01. In this case, the corresponding local time of the data aggregation server 1 is 10:03:01. It can be seen that the local time of the data aggregation server is different from the corresponding time stamp configured by the service data server. In the data aggregation server, time stamps of reaching the data aggregation server of different service data of the same monitored item at the same moment may be different, and different monitored items may have different time stamps. For example, as shown in FIG. 8, for service data PV of the same monitored item, at the same moment, a time stamp 10:00:00 of the service data in the application A is different from a time stamp 10:01:10 of the service data in an application B. For service data PV and RT of different monitored items, time stamps of the service data may be different. In addition, due to service data collection measures, the time at which service data reaches the data aggregation server is different from the time at which the service data reaches the service data server. For example, as shown in FIG. 9, the time at which service data reaches the service data server is 10:01, and the time at which the service data reaches the data aggregation server is 10:03. Therefore, during real-time data aggregation, the time stamp configured by the service data server is used as a trigger time, and the local time of the data aggregation server is not used as a trigger time at the same time, so that the accuracy of data aggregation can be ensured. Moreover, a one-to-one correspondence between each different time stamp configured by the service data server and the local time of the data aggregation server is established in a time order, so that the consistency of time can be ensured. When the service data server terminates reception of service data having a type, by using the local time of the data aggregation server, it can still be ensured that the aggregation operation is accurately performed on the service data having the type.

For this embodiment of the present invention, a specific application scenario may be shown as follows, but not limited thereto, and includes: As shown in FIG. 9, at a point SB on a time axis, the data aggregation server receives service data sent by the service data server. It is acquired that a time stamp carried in the service data is 11:02, and it is detected the time stamp is greater than a time stamp 11:01 carried in service data that is sent by the service data server and is received at a point SA on the time axis a previous time. In this case, data aggregation is performed on the service data whose time stamp is 11:01. Further, it is determined that no service data whose type is the same as that of the service data whose time stamp is 11:02 is received within 5 minutes starting from the current time. It can be determined that the service data server terminates reception of service data whose type is the same as that of the service data whose time stamp is 11:02. In this case, when the local time of the data aggregation server reaches 11:07 (corresponding to 11:03 of the service data server), data aggregation is performed on the service data whose time stamp is 11:02, so that it can be ensured that data aggregation is performed on the service data whose time stamp is 11:02.

For the another data aggregation method provided in this embodiment of the present invention, when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. Currently, during the aggregation of the massive service data stored in the cloud environment, read/write operations need to be performed on files for storing service data, and read service data further needs to be sorted once in a time order. Meanwhile, if service data whose time is the same as or earlier than that of service data on which an aggregation operation is performed is received again, this part of service data will be discarded. In comparison, in this embodiment of the present invention, to aggregate service data in different time periods, it is only necessary to detect whether a time stamp of current service data is greater than the time stamp carried in the service data that is sent by the service data server and is received by the data aggregation server the previous time, so that the efficiency of data aggregation can be improved. Because a detection operation is performed in real time, a delay of data aggregation operations can be reduced, and the real-time performance of data aggregation can be improved. Moreover, because a time tolerance period is set in this embodiment of the present invention, an aggregation operation can be performed on currently received service data whose time is relatively early, so that the precision of data aggregation and statistics can be improved.

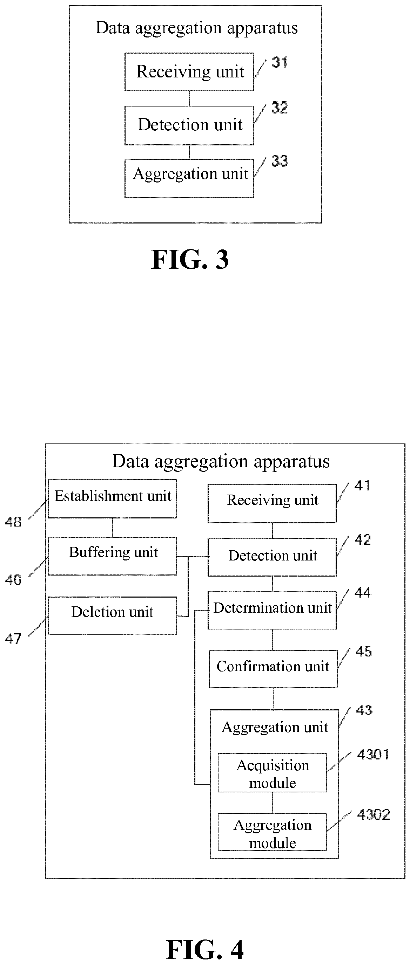

Further, as a specific implementation of the method shown in FIG. 1, an embodiment of the present invention provides a data aggregation apparatus. As shown in FIG. 3, the apparatus may include a receiving unit 31, a detection unit 32, and an aggregation unit 33.

The receiving unit 31 is configured to receive service data sent by a service data server, the service data carrying a time stamp, and the time stamp being used to identify the time at which the service server receives the service data.

The detection unit 32 is configured to detect whether the time stamp received by the receiving unit 31 is greater than a target time stamp, the target time stamp being a time stamp carried in service data that is sent by the service data server and is received a previous time.

The aggregation unit 33 is configured to perform, if the time stamp detected by the detection unit 32 is greater than the target time stamp, data aggregation on service data whose time stamp is the target time stamp, the service data corresponding to the target time stamp being stored at a preset storage location.

It should be noted that the apparatus embodiment corresponds to the foregoing method embodiment. To facilitate reading, detailed content in the foregoing method embodiment is no longer described piece by piece in the apparatus embodiment. However, it should be understood that the apparatus in this embodiment can correspondingly implement all the content in the foregoing method embodiment.

For the data aggregation apparatus provided in this embodiment of the present invention, when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. Currently, during the aggregation of the massive service data stored in the cloud environment, read/write operations need to be performed on files for storing service data, and read service data further needs to be sorted once in a time order. In comparison, in the present invention, to aggregate service data in different time periods, it is only necessary to detect whether a time stamp of current service data is greater than the time stamp carried in the service data that is sent by the service data server and is received by the data aggregation server the previous time, so that the efficiency of data aggregation can be improved. Because a detection operation is performed in real time, a delay of data aggregation operations can be reduced, and at the same time the real-time performance of data aggregation can be improved.

Further, as a specific implementation of the method shown in FIG. 2, an embodiment of the present invention provides a data aggregation apparatus. As shown in FIG. 4, the apparatus may include a receiving unit 41, a detection unit 42, and an aggregation unit 43.

The receiving unit 41 is configured to receive service data sent by a service data server, the service data carrying a time stamp, and the time stamp being used to identify the time at which the service server receives the service data.

The detection unit 42 is configured to detect whether the time stamp received by the receiving unit 41 is greater than a target time stamp, the target time stamp being a time stamp carried in service data that is sent by the service data server and is received a previous time.

The aggregation unit 43 is configured to perform, if the time stamp detected by the detection unit 42 is greater than the target time stamp, data aggregation on service data whose time stamp is the target time stamp, the service data corresponding to the target time stamp being stored at a preset storage location.

Further, the apparatus further includes a determination unit 44.

The determination unit 44 is configured to determine whether the service data whose time stamp is the target time stamp is received within a first preset time period after the service data is currently received.

The aggregation unit 43 is specifically configured to perform, if no service data whose time stamp is the target time stamp is received within the first preset time period after the service data is currently received, data aggregation on service data whose time stamp is the target time stamp; or
perform, if service data whose time stamp is the target time stamp is received within the first preset time period after the service data is currently received, data aggregation on the service data received within the first preset time period and service data whose time stamp is the target time stamp.

Further, the determination unit 44 is further configured to determine whether the service data server terminates reception of service data whose type is the same as that of the currently received service data.

The aggregation unit 43 is further configured to perform, if the service data server terminates reception of service data whose type is the same as that of the service data, data aggregation on the currently received service data.

Further, the apparatus further includes a confirmation unit 45.

The determination unit 44 is specifically configured to determine whether service data whose type is the same as that of the service data is received within a second preset time period after the service data is currently received.

The confirmation unit 45 is configured to confirm, if no service data whose type is the same as that of the service data is received within the first preset time period, that the service data server terminates reception of service data whose type is the same as that of the service data.

Further, the aggregation unit 43 may specifically include an acquisition module 4301 and an aggregation module 4302.

The acquisition module 4301 is configured to acquire, if the service data server terminates reception of service data whose type is the same as that of the service data, local time of an aggregation computing server corresponding to a next adjacent time stamp different from the current time stamp, each different time stamp configured by the service data server respectively corresponding to one local time of the aggregation computing server.

The aggregation module 4302 is configured to perform data aggregation on the currently received service data according to the local time of the aggregation computing server.

Further, the apparatus further includes a buffering unit 46 and a deletion unit 47.

The buffering unit 46 is configured to buffer, if the time stamp is the same as the target time stamp, the currently received service data in a preset queue corresponding to the target time stamp, all service data whose time stamp is the target time stamp being buffered in the preset queue.

The deletion unit 47 is configured to delete, if the time stamp is less than the target time stamp, the currently received service data.

Further, the apparatus further includes an establishment unit 48.

The establishment unit 48 is configured to establish a queue corresponding to a time stamp of currently received service data.

The buffering unit 46 is further configured to buffer the service data in the queue.

It should be noted that the apparatus embodiment corresponds to the foregoing method embodiment. To facilitate reading, detailed content in the foregoing method embodiment is no longer described piece by piece in the apparatus embodiment. However, it should be understood that the apparatus in this embodiment can correspondingly implement all the content in the foregoing method embodiment.

For the another data aggregation apparatus provided in this embodiment of the present invention, when massive service data stored in a cloud environment needs to be aggregated, a data aggregation server first receives service data sent by a service data server, it is then detected in real time whether a time stamp carried in the service data is greater than a time stamp carried in service data that is sent by the service data server and is received by the data aggregation server a previous time, and if yes, data aggregation is performed on service data whose time stamp is the same as the time stamp carried in the service data that is sent by the service data server and is received by the data aggregation server the previous time. Currently, during the aggregation of the massive service data stored in the cloud environment, read/write operations need to be performed on files for storing service data, and read service data further needs to be sorted once in a time order. Meanwhile, if service data whose time is the same as or earlier than that of service data on which an aggregation operation is performed is received again, this part of service data will be discarded. In comparison, in this embodiment of the present invention, to aggregate service data in different time periods, it is only necessary to detect whether a time stamp of current service data is greater than the time stamp carried in the service data that is sent by the service data server and is received by the data aggregation server the previous time, so that the efficiency of data aggregation can be improved. Because a detection operation is performed in real time, a delay of data aggregation operations can be reduced, and the real-time performance of data aggregation can be improved. Moreover, because a time tolerance period is set in this embodiment of the present invention, an aggregation operation can be performed on currently received service data whose time is relatively early, so that the precision of data aggregation and statistics can be improved.

The data aggregation apparatus includes a processor and a memory. The foregoing receiving unit, detection unit, aggregation unit, determination unit, confirmation unit, buffering unit, deletion unit, and establishment unit are all stored in the memory as program units. The processor executes the foregoing program units stored in the memory to achieve corresponding functions.

The processor includes a kernel. The kernel invokes a corresponding program unit from the memory. One or more kernels may be disposed. Kernel parameters are adjusted to resolve the problem that there are intermittent display stops during the displaying of a graphic chosen from a graph.

The memory may include a form such as a volatile memory, a random-access memory (RAM) and/or a non-volatile memory in a computer readable medium, for example, a read-only memory (ROM) or a flash RAM. The memory includes at least one storage chip.

The present application further provides a computer program product. When being executed on a data processing device, the computer program product is applicable to execution of program codes initialized with the following method steps: receiving, by a data aggregation server, service data sent by a service data server, the service data carrying a time stamp, and the time stamp being used to identify the time at which the service server receives the service data; detecting whether the time stamp is greater than a target time stamp, the target time stamp being a time stamp carried in service data that is sent by the service data server and is received by the data aggregation server a previous time; and performing, if the time stamp is greater than the target time stamp, data aggregation on service data whose time stamp is the target time stamp, the service data corresponding to the target time stamp being stored at a preset storage location.

Those skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer usable program codes.

The present application is described with reference to the flowcharts and/or block diagrams of the data aggregation method and apparatus and the computer program product according to the embodiments of the present application. It should be understood that computer program instructions may be used to implement each process and/or each block in the flowcharts and/or the block diagrams and a combination of processes and/or blocks in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory may include a form such as a volatile memory, a RAM and/or a non-volatile memory in a computer readable medium, for example, a ROM or a flash RAM. The memory is an example of the computer readable medium.

The computer readable medium includes a nonvolatile, volatile, removable, or irremovable medium, and may implement storage of information by using any method or technology. The information may be a computer readable instruction, a data structure, a program module or other data. An example of a computer storage medium includes, but is not limited to, a phase-change RAM (PRAM), a static RAM (SRAM), a dynamic RAM (DRAM), another type of RAM, a ROM, an electrically erasable programmable ROM (EEPROM), a flash memory or another memory technology, a compact-disc ROM (CD-ROM), a digital versatile disc (DVD) or another optical storage, a cassette tape, a magnetic tape, a magnetic disk storage or another magnetic storage device or any other non-transmissible medium, and can be used to store information that can be accessed by a computing device. According to the definition herein, the computer readable medium does not include transitory computer readable media such as a modulated data signal and carrier.

The foregoing descriptions are merely embodiments of the present application and are not used to limit the present application. Those skilled in the art can make various changes and variations to the present application. Any modifications, equivalent replacements, and improvements made within the spirit and principle of the present application shall fall within the scope of the claims of present application.

## Claims

1. A data aggregation method, comprising:
receiving, by a data aggregation server, service data sent by a service data server, the service data carrying a time stamp, and the time stamp being used to identify the time at which the service server receives the service data;
detecting whether the time stamp is greater than a target time stamp, the target time stamp being a time stamp carried in service data that is sent by the service data server and is received by the data aggregation server a previous time; and
performing, if the time stamp is greater than the target time stamp, data aggregation on service data whose time stamp is the target time stamp, the service data corresponding to the target time stamp being stored at a preset storage location.

2. The data aggregation method according to claim 1, wherein before the step of performing data aggregation on service data whose time stamp is the target time stamp, the method further comprises:
determining whether service data whose time stamp is the target time stamp is received within a first preset time period after the service data is currently received; and
the step of performing data aggregation on service data whose time stamp is the target time stamp comprises:
performing, if no service data whose time stamp is the target time stamp is received within the first preset time period, data aggregation on service data whose time stamp is the target time stamp; and
performing, if service data whose time stamp is the target time stamp is received within the first preset time period, data aggregation on the service data received within the first preset time period and service data whose time stamp is the target time stamp.

3. The data aggregation method according to claim 1, wherein after the step of performing, if the time stamp is greater than the target time stamp, data aggregation on service data whose time stamp is the target time stamp, the method further comprises:
determining whether the service data server terminates reception of service data whose type is the same as that of the currently received service data; and
performing, if the service data server terminates reception of service data whose type is the same as that of the service data, data aggregation on the currently received service data.

4. The data aggregation method according to claim 3, wherein the step of determining whether the service data server terminates reception of service data whose type is the same as that of the currently received service data comprises:
determining whether service data whose type is the same as that of the service data is received within a second preset time period after the service data is currently received; and
confirming, if no service data whose type is the same as that of the service data is received within the second preset time period, that the service data server terminates reception of service data whose type is the same as that of the service data.

5. The data aggregation method according to claim 3 or 4, wherein the step of performing, if the service data server terminates reception of service data whose type is the same as that of the service data, data aggregation on the currently received service data comprises:
acquiring, if the service data server terminates reception of service data whose type is the same as that of the service data, local time of an aggregation computing server corresponding to a next adjacent time stamp different from the current time stamp, each different time stamp configured by the service data server respectively corresponding to one local time of the aggregation computing server; and
performing data aggregation on the currently received service data according to the local time of the aggregation computing server.

6. The data aggregation method according to claim 1, wherein after the step of detecting whether the time stamp is greater than a target time stamp, the method further comprises:
buffering, if the time stamp is the same as the target time stamp, the currently received service data in a preset queue corresponding to the target time stamp, all service data whose time stamp is the target time stamp being buffered in the preset queue; and
deleting, if the time stamp is less than the target time stamp, the currently received service data.

7. The data aggregation method according to claim 1, wherein after the step of performing, if the time stamp is greater than the target time stamp, data aggregation on service data whose time stamp is the target time stamp, the method further comprises:
establishing a queue corresponding to a time stamp of currently received service data; and
buffering the service data in the queue.

8. A data aggregation apparatus, comprising:
a receiving unit configured to receive service data sent by a service data server, the service data carrying a time stamp, and the time stamp being used to identify the time at which the service server receives the service data;
a detection unit configured to detect whether the time stamp received by the receiving unit is greater than a target time stamp, the target time stamp being a time stamp carried in service data that is sent by the service data server and is received a previous time; and
an aggregation unit configured to perform, if the time stamp detected by the detection unit is greater than the target time stamp, data aggregation on service data whose time stamp is the target time stamp, the service data corresponding to the target time stamp being stored at a preset storage location.

9. The data aggregation apparatus according to claim 8, wherein the apparatus further comprises a determination unit, wherein
the determination unit is configured to determine whether service data whose time stamp is the target time stamp is received within a first preset time period after the service data is currently received; and
the aggregation unit is specifically configured to perform, if no service data whose time stamp is the target time stamp is received within the first preset time period after the service data is currently received, data aggregation on service data whose time stamp is the target time stamp; or
perform, if service data whose time stamp is the target time stamp is received within the first preset time period after the service data is currently received, data aggregation on the service data received within the first preset time period and service data whose time stamp is the target time stamp.

10. The data aggregation apparatus according to claim 9, wherein
the determination unit is further configured to determine whether the service data server terminates reception of service data whose type is the same as that of the currently received service data; and
the aggregation unit is further configured to perform, if the service data server terminates reception of service data whose type is the same as that of the service data, data aggregation on the currently received service data.

11. The data aggregation apparatus according to claim 10, wherein the apparatus further comprises a confirmation unit, wherein
the determination unit is specifically configured to determine whether service data whose type is the same as that of the service data is received within a second preset time period after the service data is currently received; and
the confirmation unit is configured to confirm, if no service data whose type is the same as that of the service data is received within the second preset time period, that the service data server terminates reception of service data whose type is the same as that of the service data.

12. The data aggregation apparatus according to claim 10 or 11, wherein the aggregation unit comprises:
an acquisition module configured to acquire, if the service data server terminates reception of service data whose type is the same as that of the service data, local time of an aggregation computing server corresponding to a next adjacent time stamp different from the current time stamp, each different time stamp configured by the service data server respectively corresponding to one local time of the aggregation computing server; and
an aggregation module configured to perform data aggregation on the currently received service data according to the local time of the aggregation computing server.

13. The data aggregation apparatus according to claim 8, wherein the apparatus further comprises:
a buffering unit configured to buffer, if the time stamp is the same as the target time stamp, the currently received service data in a preset queue corresponding to the target time stamp, all service data whose time stamp is the target time stamp being buffered in the preset queue; and
a deletion unit configured to delete, if the time stamp is less than the target time stamp, the currently received service data.

14. The data aggregation apparatus according to claim 13, wherein the apparatus further comprises an establishment unit, wherein
the establishment unit is configured to establish a queue corresponding to a time stamp of currently received service data; and
the buffering unit is further configured to buffer the service data in the queue.
